# EUROPEAN PATENT APPLICATION

(11) **EP 4 369 491 A2**
(43) Date of publication of application: **15.05.2024**
(21) Application number: 24167368.0
(22) Date of filing: 21.06.2019
(51) Int. Cl.: H01M 50/249

(54) **BATTERY PACK AND ELECTRIC VEHICLE**

(30) Priority: 09.01.2019 CN 201910021244; 09.01.2019 CN 201910020967; 09.01.2019 CN 201910021246; 09.01.2019 CN 201910021248; 09.01.2019 CN 201910021247; 09.01.2019 CN 201910020925
(62) Divisional of application: 19909472.3
(71) Applicant: BYD Company Limited, Shenzhen, Guangdong 518118 (CN)
(72) Inventor: HE, Long, Shenzhen, 518118 (CN); SUN, Huajun, Shenzhen, 518118 (CN); JIANG, Wenfeng, Shenzhen, 518118 (CN); LU, Zhipei, Shenzhen, 518118 (CN); ZHENG, Weixin, Shenzhen, 518118 (CN); TANG, Jianglong, Shenzhen, 518118 (CN); ZHU, Yan, Shenzhen, 518118 (CN); WANG, Xinyue, Shenzhen, 518118 (CN); HE, Kefeng, Shenzhen, 518118 (CN)
(74) Representative: DehnsGermany Partnerschaft von Patentanwälten

(57) **Abstract**

A battery pack and an electric vehicle are provided. The battery pack includes a housing (200) comprising a vehicle tray (210) that is fitted and connected to a vehicle body; or a housing being formed on a vehicle body; and a plurality of cells, provided in the housing, wherein the sum V1 of the volumes of the plurality of cells and the volume V2 of the battery pack satisfy V1/V2≥55%. The battery pack has a first direction and a second direction perpendicular to each other. A length direction of the cell is arranged along the first direction of the battery pack, and the plurality of cells are arranged along the second direction of the battery pack. The housing accommodates only one cell along the first direction; and the cell comprises a cell body, and the length of the cell body is 400-2500 mm.

## Description

### CROSS-REFERENCE TO RELATED APPLICATIONS

This application claims priority to Chinese Patent Application SerialNos. "201910021244.0", "201910020967.9", "201910021246.X", "201910021248.9", "201910021247.4", and "201910020925.5", filed by BYD Company Limited on January 9, 2019. The entire content of the above-referenced applications is incorporated herein by reference.

### FIELD

This application relates to the technical field of batteries, and in particular, to a battery pack and an electric vehicle having the battery pack.

### BACKGROUND

Battery packs applied to, for example, electric vehicles in the related art mainly include a housing and a plurality of battery modules mounted in the housing. Each of the battery modules is formed by a plurality of cells assembled together

Users' requirements on the battery life of electric vehicles are becoming higher. However, in the case of limited space at the bottom of the vehicle body, power battery packs in the prior art have the problem of low space utilization and the energy density of such power battery packs cannot meet the requirements, which gradually becomes an important factor hindering the development of electric vehicles.

### SUMMARY

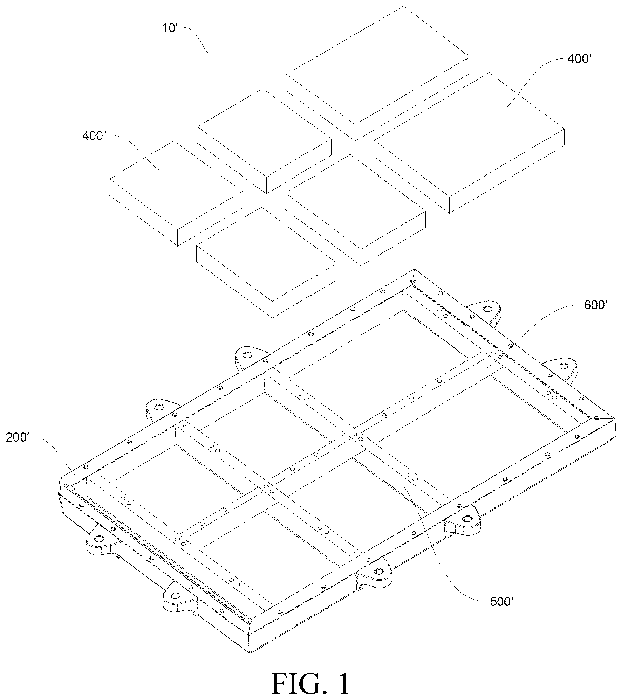

In the related art, as shown in FIG. 1, a housing 200" of a battery pack 10' is often divided into a plurality of mounting regions for battery modules 400' by width-direction transverse beams 500' and length-direction transverse beams 600'. For example, the battery modules 400' in the battery pack disclosed in CN107925028A are fixed on the width-direction transverse beams 500' or the length-direction transverse beams 600' by screws or other means. The battery module 400' includes a plurality of cells arranged in sequence. A plurality of cells are arranged to form a cell array. End beams and/or side beams are disposed outside the cell array. Usually, both end beams and side beams are disposed. The end beams and the side beams are fixed to define a space for accommodating the cell array. In addition, the end beams and the side beams are connected by screws, or by other connecting members such as a pull rod, so as to fix the cell array.

The applicant finds through experiments and analysis that because the battery modules 400' are fixed on the width-direction transverse beams 500' or the length-direction transverse beams 600' by screws, space is wasted, and the use of screws or other connecting members increases the weight, reducing the energy density. In addition, because the battery modules 400' are designed with the end beams and side beams which all have a certain thickness and height, space inside the housing 200" is wasted, leading to low utilization of the volume of the housing 200". Generally, for the battery pack 10' in the prior art, the ratio of the sum of the volumes of cells in the housing 200" to the volume of the housing 200" is about 50%, or even lower than 40%.

For the battery pack 10' provided in the prior art, the end beams and the side beams of the battery module 400' and the connection and mounting manners inside the battery pack 10' reduce the utilization of the space inside the housing 200". As a result, in the battery pack 10', the ratio of the sum of the volumes of cells to the volume of the housing 200" is too low, and the energy density cannot meet the increasing requirements of users on the battery life of electric vehicles, which gradually becomes an important factor hindering the development of electric vehicles. In addition, a complicated assembly process is required, and complex assembly procedures need to be performed. To be specific, first, cells need to be assembled to form a battery module, and then the battery module needs to be mounted in the housing, leading to increased labor and material costs. In addition, multiple assembly procedures required in the assembly process of the battery pack lead to an increase in defect rate and an increase in the possibility of loosening and unstable mounting of the battery pack, adversely affecting the quality of the battery pack and reducing the stability and reliability of the battery pack.

This application is intended to resolve at least one of the technical problems existing in the prior art. In view of this, an object of the present application is to provide a battery pack, which has the advantages of high space utilization, high energy density, long battery life, high reliability, low cost, and high quality.

The present invention also provides an electric vehicle having the battery pack.

According to an embodiment in a first aspect of the present invention, a battery pack is provided. The battery pack includes a housing; and a plurality of cells, provided in the housing, where the sum V1 of the volumes of the plurality of cells and the volume V2 of the battery pack satisfy V1/V2≥55%. The battery pack has a first direction and a second direction perpendicular to each other. A length direction of the cell is arranged along the first direction of the battery pack, and the plurality of cells are arranged along the second direction of the battery pack. The housing accommodates only one cell along the first direction. The cell includes a cell body, and the length of the cell body is 600-2500 mm.

In the power battery according to the embodiment of the present application, by limiting the ratio of the sum of the volumes of the cells to the volume of the battery pack, that is, V1/V2, to be ≥55%, the space utilization of the battery pack is improved, and more cells can be arranged in the battery pack. That is, more energy supply structures are arranged in the unit space to increase the energy density, thereby increasing the battery life without expanding the occupied space. Moreover, in the process of assembling the battery pack, the cost is reduced, and the quality and reliability of the battery pack are improved.

According to an embodiment in a second aspect of the present application, an electric vehicle is provided, which includes the battery pack according to the embodiment in the first aspect of the present application.

In the electric vehicle according to the embodiment of the present application, the battery life can be improved without expanding the space occupied by the battery by using the battery pack according to the embodiment in the first aspect of the present application.

According to an embodiment in a third aspect of the present application, an energy storage device is provided, which includes the battery pack according to the embodiment in the first aspect of the present application.

Other aspects and advantages of this application will be given in the following description, some of which will become apparent from the following description or may be learned from practices of this application.

### BRIEF DESCRIPTION OF THE DRAWINGS

FIG. 1 is an exploded view of a battery pack provided in the prior art.
FIG. 2 is a cross-sectional view of a battery pack according to an embodiment of this application.
FIG. 3 is a three-dimensional diagram of a battery pack according to an embodiment of this application.
FIG. 4 is an exploded view of a battery pack according to an embodiment of this application.
FIG. 5 is a schematic structural diagram of a cell according to an embodiment of this application.
FIG. 6 is a schematic view showing the manner of arrangement of battery modules in a battery pack according to an embodiment of this application.
FIG. 7 is a schematic view showing the manner of arrangement of battery modules in a battery pack according to another embodiment of this application.
FIG. 8 is a schematic structural diagram of an electric vehicle formed to having a housing of a battery pack according to an embodiment of this application.
FIG. 9 is a schematic structural diagram of an electric vehicle according to an embodiment of this application.
FIG. 10 is an exploded view of an electric vehicle according to an embodiment of this application.
FIG. 11 is an enlarged view of region G in FIG. 2.
FIG. 12 is a three-dimensional diagram of a battery pack according to a first optional embodiment of this application.
FIG. 13 is a three-dimensional diagram of a battery pack according to a second optional embodiment of this application.
FIG. 14 is a three-dimensional diagram of a battery pack according to a third optional embodiment of this application.
FIG. 15 is a three-dimensional diagram of a battery pack according to a fourth embodiment of this application.
FIG. 16 is a three-dimensional diagram of a battery pack according to a fifth optional embodiment of this application.

### Reference numerals:

Related art:
10' battery pack, 200" housing, 400' battery module, 600' length-direction transverse beam, 500' width-direction transverse beam

This application:
1 electric vehicle,
10 battery pack,
100 cell, 110 cell body, 200 housing, 210 tray, 220 upper cover, 201 first side beam, 202 second side beam, 203 first end beam, 204 second end beam, 222 exhaust passage, 221 gas inlet
400 battery module
101 first electrode tab, 102 second electrode tab, 103 anti-explosion valve,
600 length-direction transverse beam, 500 width-direction transverse beam
A length direction of battery pack 10, B width direction of battery pack 10, C height direction of battery pack 10
L length of cell body 110, H width of cell body 110, D thickness of cell body 110, W width of vehicle body, F width of housing 200.

### DETAILED DESCRIPTION

Embodiments of this application are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary and used only for explaining this application, and should not be construed as a limitation on this application.

In the description of this application, it should be understood that orientation or position relationships indicated by the terms such as "vertical", "transverse", "length", "width", "thickness", "inside", and "outside" are based on orientation or position relationships shown in the accompanying drawings, and are used only for ease and brevity of illustration and description, rather than indicating or implying that the mentioned apparatus or component must have a particular orientation or must be constructed and operated in a particular orientation. Therefore, such terms should not be construed as limiting of this application.

In addition, in the description of this application, "a plurality of" means two or more than two.

Considering the status of battery packs in the related art, this application provides a battery pack and an electric vehicle having the battery pack. The battery pack has the advantages of high space utilization, high energy density, and long battery life.

A battery pack 10 according to an embodiment of this application is described with reference to accompanying drawings.

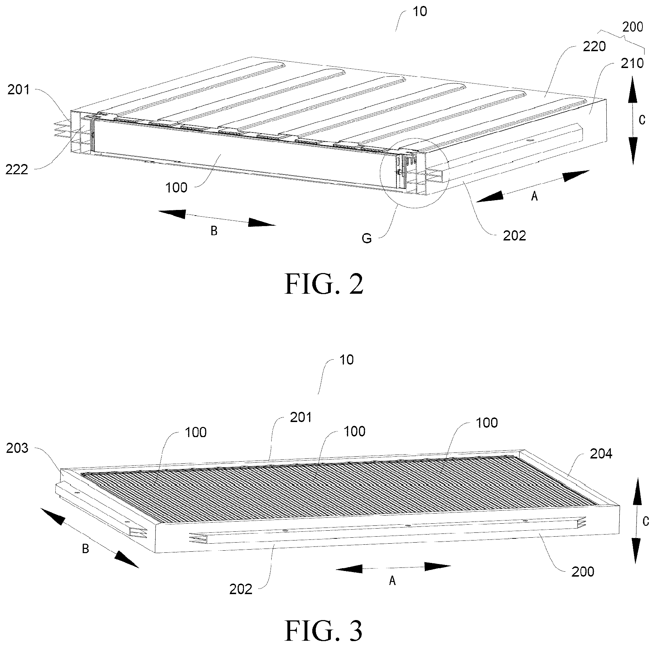

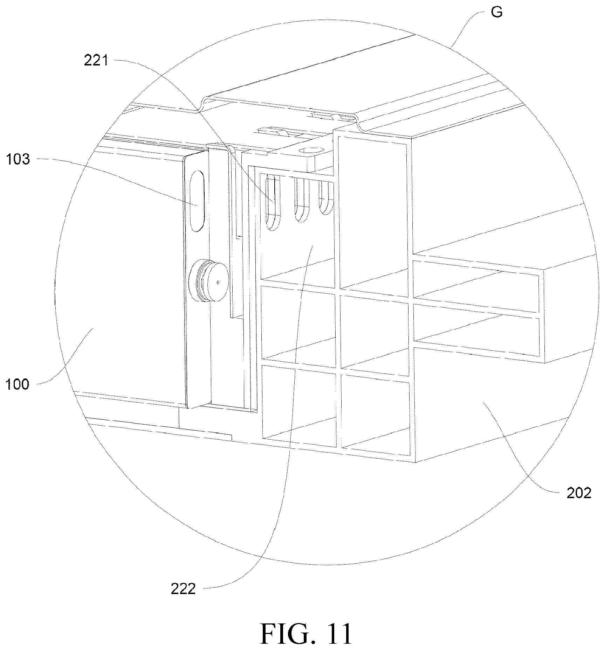

As shown in FIGs. 2-16, the battery pack 10 according to an embodiment of the present application includes a housing 200 and a plurality of cells 100.

The plurality of cells 100 are provided in the housing 200, and the housing 200 can be understood as a housing for accommodating the plurality of cells 100. For example, it may include a tray 210 and an upper cover 220. The tray 210 and the upper cover 220 work together to define a space accommodating the plurality of cells 100. The plurality of cells 100 are provided in the tray 210, and are covered by the upper cover 220. The sum V1 of the volumes of the plurality of cells 100 and the volume V2 of the battery pack 10 satisfy V1/V2≥55%.

Those skilled in the art can understand that V1 is the product of the volume of each cell 100 and the number of cells 100, that is, V1 is the total volume of the plurality of cells 100; and V2 is the overall volume of a three-dimensional shape defined by an external profile of the battery pack 10.

In the battery pack 10 according to the embodiment of the present application, by limiting the ratio of the sum V1 of the volumes of the cells 100 to the volume V2 of the battery pack 10, that is, V1/V2, to be ≥55%, the space utilization of the battery pack 10 is improved, and more cells 100 can be arranged in the battery pack 10. That is, more energy supply structures are arranged in the unit space to increase the energy density, thereby increasing the battery life without expanding the occupied space. Moreover, in the process of assembling the battery pack, the cost is reduced, and the quality and reliability of the battery pack are improved. In the battery pack provided in this application, the housing accommodates only one cell along a first direction. The cell includes a cell body, and the length of the cell body is 600-2500 mm and is arranged along the first direction in the battery pack. The plurality of cells are arranged along the second direction. The long cells are arranged and located in the battery pack, to form a battery pack having a volume utilization of 55% or higher. In this way, the space utilization, the energy density and the battery life of an electric vehicle using the battery pack are improved.

In some specific embodiments of this application, the ratio of the sum V1 of the volumes of the cells 100 to the volume V2 of the battery pack 10 satisfy V1/V2≥60%.

In some other specific embodiments of this application, the ratio of the sum V1 of the volumes of the cells 100 to the volume V2 of the battery pack 10 satisfy V1/V2≥62%.

In some other specific embodiments of this application, the ratio of the sum V1 of the volumes of the cells 100 to the volume V2 of the battery pack 10 satisfy V1/V2≥65%.

It can be understood that V2 is the overall volume of a three-dimensional shape defined by an external profile of the battery pack 10, that is, a volume including the internal space of the battery pack 10, a volume of the three-dimensional area enclosed in space by the external profile of the battery pack 10. In electric vehicles, V1/V2 can be understood as space utilization.

Those skilled in the art can understand that due to some factors, for example, peripheral components will occupy the internal space of the housing 200, including an anti-collision space at a bottom of the tray, a liquid cooling system, a thermal insulation material, an insulation protection, an accessory for thermal safety, a flame exhaust passage, and a high-voltage power distribution module, etc., so the peak value of V1/V2 is usually 80%, that is, V1/V2≤80%.

The battery pack 10 according to a specific embodiment of the present application is described below with reference to the drawings, in which a length direction of the battery pack 10 is indicated by an arrow A, a width direction of the battery pack 10 is indicated by an arrow B, and a height direction of the battery pack 10 is indicated by an arrow C.

In some specific embodiments of the present application, as shown in FIGs. 2 to 4, a length direction of the cell 100 is arranged along the width direction B of the battery pack 10, and a plurality of cells 100 are arranged along the length direction A of the battery pack 10, thus promoting V1/V2 of the battery pack 10 to increase to 55%, 60%, 62%, 65% or higher. Moreover, to reserve enough space for mounting other electronic components (such as battery management system, BMS), generally the space utilization of the battery pack 10 is set below 85%.

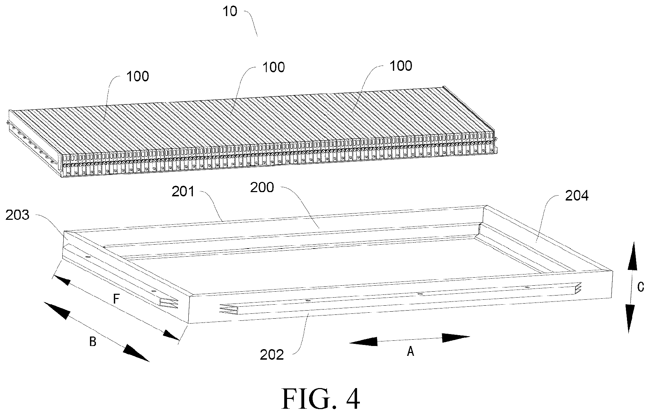

In some specific embodiments of the present application, as shown in FIGs. 3 and 4, in the width direction B of the battery pack 10, a distance from the cell 100 to sidewalls of the housing 200 is less than the length of the cell 100. Specifically, in the width direction B of the battery pack 10, a shortest distance from one end of the cell 100 to a side beam of the housing 200 adjacent to the end of the cell 100 is L1, a shortest distance from the other end of the cell 100 to a side beam of the housing 200 adjacent to the other end of the cell 100 is L2, and the length L of the cell 100 satisfies: L1 + L2 < L. In this way, the battery pack 10 cannot additionally accommodate another cell 100 in the width direction B.

In other words, the housing 200 accommodates only one cell 100 in the width direction B of the battery pack 10. That is, in the width direction B of the battery pack 10, the cell 100 cannot be arranged in a pattern including two or more cells. When at least two layers of cells 100 are provided in the battery pack 10 along the height direction C of the battery pack 10, at least one layer of cells 100 can accommodate only one cell in the width direction B of the battery pack 10. The description "accommodate only one cell 100" means that in the width direction B of the battery pack 10, only one cell 100 can be arranged side by side. However, in the height direction C of the battery pack 10, although two layers of cells can be provided, it is not intended to arrange more than one cell 100 in the width direction B of the battery pack 10.

It can be understood that in the width direction B of the battery pack 10, side beams are provided at two sides of the housing 200; and in the length direction A of the battery pack 10, end beams are provided at two ends of the housing 200.

In some specific embodiments of this application, as shown in FIGs. 3 and 4, the length of the cell 100 extends across the entire width direction B of the battery pack 10. That is, along the width direction B of the battery pack 10, the cell 100 extends from one side to the other side of the housing 200, and the length of the cell 100 is filled in the width direction B of the battery pack 10. The housing 200 cannot accommodate two or more cells 100 in the width direction B of the battery pack 10. Two ends of the cell 100 in the length direction can be fitted to the two opposite side walls of the housing 200 in the width direction B, for example, fixed to the housing 200. As a result, no width-direction transverse beams and length-direction transverse beams are required in the housing 200, and the connected cells 100 can directly act as the intermediate beams. This greatly simplifies the structure of the housing 200, and reduces the space occupied by the intermediate beams and by structures for mounting the cells 100, thereby improving the space utilization and improving the battery life.

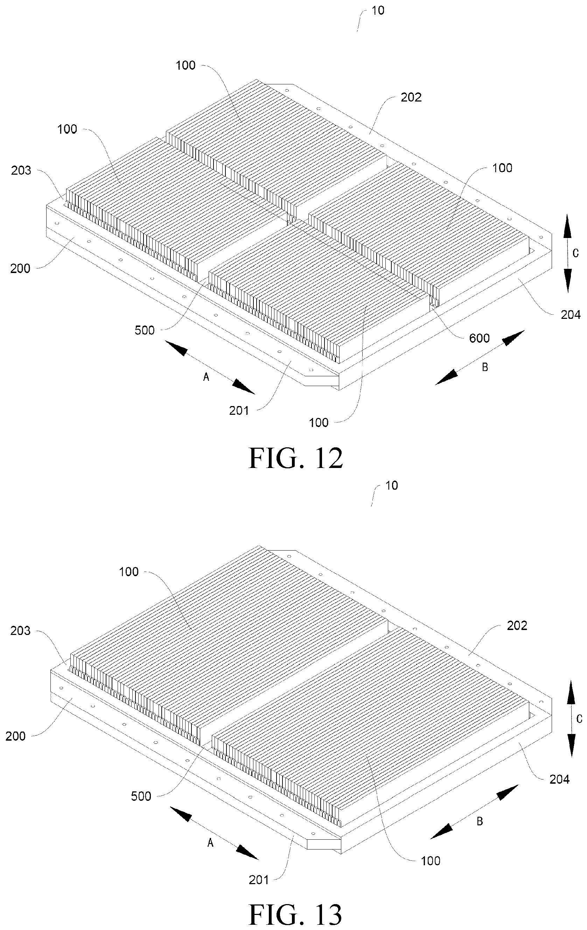

The embodiments of the present application are not limited to not providing width-direction transverse beams and length-direction transverse beams. In some embodiments of the present application, as shown in FIG. 13, a width-direction transverse beam 500 can be provided in the housing 200. The width-direction transverse beam 500 extends along the width direction B of the battery pack 10, and a plurality of cells 100 are arranged along the length direction A of the battery pack 10 to form a battery array. The width-direction transverse beam 500 divides the battery array into at least two parts along the length direction A of the battery pack 10. Each part of the battery array includes at least one cell 100, and each part of the battery array constitutes a battery module 400.

In some other embodiments of the present application, as shown in FIG. 12, a length-direction transverse beam 600 can also be provided in the housing 200. The length-direction transverse beam 600 extends along the length direction A of the battery pack 10. The length direction of the cell 100 is arranged along the width direction B of the battery pack 10. A plurality of cells 100 are arranged along the length direction A of the battery pack 10 to form a battery array. At least two rows of battery arrays are arranged in the housing 200 along the width direction B of the battery pack 10. Each row of battery array includes a plurality of cells 100 arranged along the length direction A of the battery pack 10. The length-direction transverse beam 600 is located between two adjacent rows of battery arrays.

In some specific embodiments of this application, the housing 200 includes side beams located at two sides of the battery pack 10 in the width direction B, and both ends in the length direction of the cell 100 are supported by the side beams. The housing 200 includes end beams located at two ends of the battery pack 10 in the length direction A, and the end beams provide an inward pressing force against the cell 100 adjacent to them.

As shown in FIGs. 3 and 4, the housing 200 has a first side beam 201, a second side beam 202, a first end beam 203 and a second end beam 204. The first side beam 201, the second side beam 202, the first end beam 203 and second end beam 204 are sequentially connected end to end. The first side beam 201 and the second side beam 202 are opposite in the width direction B of the battery pack 10, and the first end beam 203 and the second end beam 204 are opposite in the length direction A of the battery pack 10. The first side beam 201 and the second side beam 202 provide support for the two ends of the cell 100 in the length direction, that is, one end of the cell 100 is supported by the first side beam 201 and the other end is supported by the second side beam 202. The first end beam 203 and the second end beam 204 provide a pressing force against two sides of the cell 100 in the thickness direction. That is, the first end beam 203 applies a force toward the second end beam 204 to the cell 100 arranged adjacent to the first end beam 203, and the second end beam 204 applies a force toward the first end beam 203 to the cell 100 arranged adjacent to the second end beam 204, to allow a plurality of cells 100 to be tightly arranged between the first end beam 203 and the second end beam 204 along the length direction A of the battery pack 10, where the plurality of cells 100 fit to each other. In addition, the first end beam 203 and the second end beam 204 can limit the plurality of cells 100 in the length direction A of the battery pack 10. Particularly when the cell 100 expands slightly, they can buffer and provide an inward pressing force against the cell 100, to prevent excessive expansion and deformation of the cell 100.

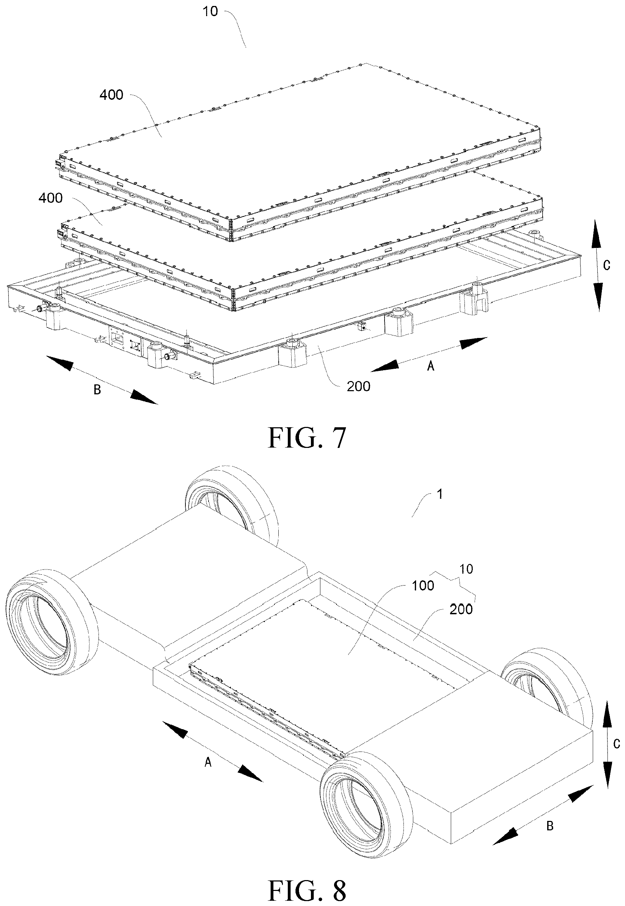

In some specific embodiments of the present application, as shown in FIG. 7, the length direction of the cell 100 is arranged along the width direction B of the battery pack 10, and a plurality of cells 100 are arranged along the length direction A of the battery pack 10 to form a battery array. There are at least two layers of battery arrays in the housing 200 along the height direction C of the battery pack 10. As a result, the number of cells 100 is optimized, whereby the space utilization is increased to increase the energy density, and BIC and low-voltage sampling are easier to be integrally implemented.

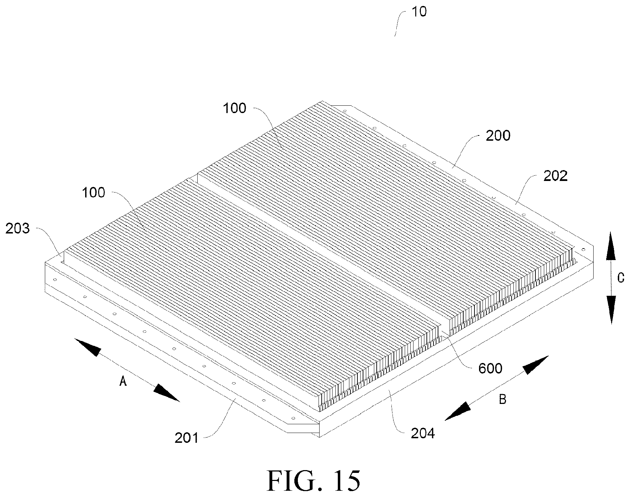

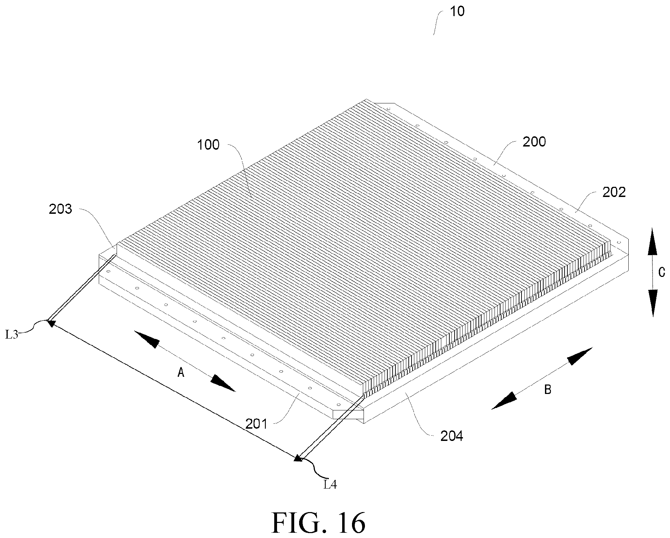

In some specific embodiments of the present application, as shown in FIGs. 15 and 16, the length direction of the cell 100 is arranged along the length direction A of the battery pack 10, and a plurality of cells 100 are arranged along the width direction B of the battery pack 10. This leads to a space utilization of the battery pack 10 of 55%, 60%, 62%, 65% or higher.

In some specific embodiments of the present application, as shown in FIGs. 15 and 16, in the length direction A of the battery pack 10, a distance from the cell 100 to end walls of and the housing 200 is less than the length of the cell 100. Specifically, in the length direction A of the battery pack 10, a shortest distance from one end of the cell 100 to an end beam of the housing 200 adjacent to the end of the cell 100 is L3, a shortest distance from the other end of the cell 100 to an end beam of the housing 200 adjacent to the other end of the cell 100 is L4, and the length L of the cell 100 satisfies: L3 + L4 < L. In this way, the battery pack 10 cannot additionally accommodate another cell 100 in the length direction A.

In other words, the housing 200 accommodates only one cell 100 in the length direction A of the battery pack 10. That is, in the length direction A of the battery pack 10, the cell 100 cannot be arranged in a pattern including two or more cells.

It can be understood that in the width direction B of the battery pack 10, side beams are provided at two sides of the housing 200; and in the length direction A of the battery pack 10, end beams are provided at two sides of the housing 200.

In some specific embodiments of this application, as shown in FIGs. 15 and 16, the length of the cell 100 extends across the entire length direction A of the battery pack 10. That is, along the length direction A of the battery pack 10, the cell 100 extends from one end to the other end of the housing 200, and the length of the cell 100 is filled in the length direction A of the battery pack 10. The housing 200 cannot accommodate two or more cells 100 in the length direction A of the battery pack 10. Two ends of the cell 100 in the length direction can be engaged to the two opposite end walls of the housing 200 in the length direction A, for example, fixed to the housing 200. As a result, no width-direction transverse beams and length-direction transverse beams are required in the housing 200, and the connected cells 100 can directly act as the intermediate beams. This greatly simplifies the structure of the housing 200, and reduces the space occupied by the intermediate beams and by structures for mounting the cells 100, thereby improving the space utilization and improving the battery life.

The embodiments of the present application are not limited to not providing length-direction transverse beams and width-direction transverse beams. In some embodiments of the present application, as shown in FIG. 15, a length-direction transverse beam 600 can be provided in the housing 200. The length-direction transverse beam 600 extends along the length direction A of the battery pack 10, and a plurality of cells 100 are arranged along the width direction B of the battery pack 10 to form a battery array. The length-direction transverse beam 600 divides the battery array into at least two parts along the width direction B of the battery pack 10. Each part of the battery array includes at least one cell 100, and each part of the battery array constitutes a battery module 400.

In some other embodiments of the present application, a width-direction transverse beam 500 can also be provided in the housing 200. The width-direction transverse beam 500 extends along the width direction B of the battery pack 10. The length direction of the cell 100 is arranged along the length direction A of the battery pack 10. A plurality of cells 100 are arranged along the width direction B of the battery pack 10 to form a battery array. At least two rows of battery arrays are arranged in the housing 200 along the length direction A of the battery pack 10. Each row of battery array includes a plurality of cells 100 arranged along the width direction B of the battery pack 10. The width-direction transverse beam 500 is located between two adjacent rows of battery arrays.

In some specific embodiments of this application, the housing 200 includes end beams located at two ends of the battery pack 10 in the length direction A, and both ends in the length direction of the cell 100 are supported by the end beams. The housing 200 includes side beams located at two sides of the battery pack 10 in the width direction B, and the side beams provide an inward pressing force against the cell 100 adjacent to them.

As shown in FIG. 16, the housing 200 has a first side beam 201, a second side beam 202, a first end beam 203 and a second end beam 204. The first side beam 201, the second side beam 202, the first end beam 203 and second end beam 204 are sequentially connected end to end. The first side beam 201 and the second side beam 202 are opposite in the width direction B of the battery pack 10, and the first end beam 203 and the second end beam 204 are opposite in the length direction A of the battery pack 10. The first end beam 203 and the second end beam 204 provide support for the two ends of the cell 100 in the length direction, that is, one end of the cell 100 is supported by the first end beam 203 and the other end is supported by the second end beam 204. The first side beam 201 and the second side beam 202 provide a pressing force against two sides of the cell 100 in the thickness direction. That is, the first side beam 201 applies a force toward the second side beam 202 to the cell 100 arranged adjacent to the first side beam 201, and the second side beam 202 applies a force toward the first side beam 201 to the cell 100 arranged adjacent to the second side beam 202, to allow a plurality of cells 100 to be tightly arranged between the first side beam 201 and second side beam 202 along the width direction B of the battery pack 10, where the plurality of cells 100 fit to each other. In addition, the first side beam 201 and the second side beam 202 can limit the plurality of cells 100 in the width direction B of the battery pack 10. Particularly when the cell 100 expands slightly, they can buffer and provide an inward pressing force against the cell 100, to prevent excessive expansion and deformation of the cell 100.

In some specific embodiments of the present application, as shown in FIG. 15, the length direction of the cell 100 is arranged along the length direction A of the battery pack 10, and a plurality of cells 100 are arranged along the width direction B of the battery pack 10 to form a battery array. There is at least one layer of battery arrays in the housing 200 along the height direction C of the battery pack 10. As a result, the number of cells 100 is optimized, whereby the space utilization is increased to increase the energy density, and BIC and low-pressure sampling are easier to be integrally implemented.

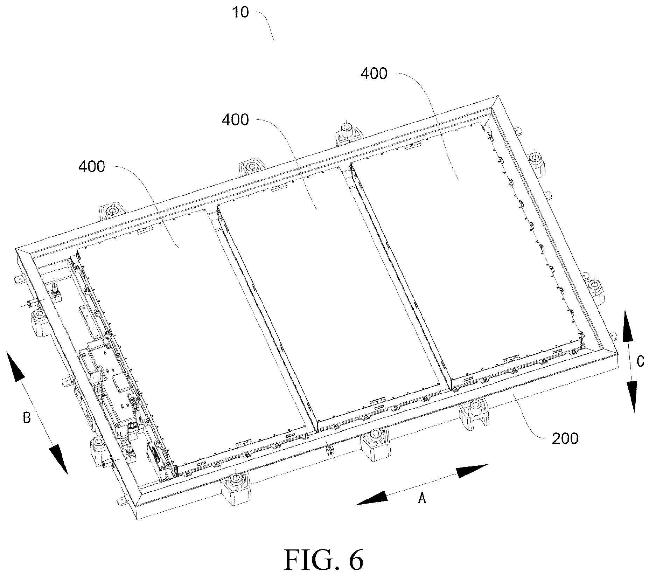

In some specific embodiments of the present application, a plurality of cells 100 can be assembled into multiple battery modules 400. The multiple battery modules 400 can be arranged along the length direction A of the battery pack 10 (as shown in FIG. 6), the multiple battery modules 400 can also be arranged along the width direction B of the battery pack 10 (as shown in FIG. 15), or the multiple battery modules 400 can also be arranged along the height direction C of the battery pack 10 to form a multilayer structure (as shown in FIG. 7). In other words, regardless of the cells 100 extending along the width direction B or the length direction A of the battery pack 10, the plurality of cells 100 can be arranged in multiple layers along the height direction C of the battery pack 10. The multiple battery modules 400 can also be arranged along both the length direction A and the height direction C of the battery pack 10, or along both the width direction A and the height direction C of the battery pack 10. As a result, the number of battery modules 400 is optimized, whereby the space utilization is increased to increase the energy density, and BIC and low-voltage sampling are easier to be integrally implemented. It should be understood that the battery module 400 in the embodiment of the present application does not have structures such as end beams and side beams.

In the related art, due to the small size and short length of the cell, the two opposite ends of the cell cannot be fitted to the two opposite side walls of the housing 200". Therefore, the length-direction transverse beams 600' and/or the width-direction transverse beams 500' (as shown in FIG. 1) is/are needed to be provided in the housing 200", to facilitate the cell assembly. When the cells are mounted in the housing 200" by means of the battery modules 400', there will be multiple cells along the width direction of the battery pack 10'. That is, the cell does not extend between the two opposite side walls, but extend between two opposite length-direction transverse beams 600' or width-direction transverse beams 500'. The battery module is fixed to an adjacent length-direction transverse beam 600' and/or width-direction transverse beams 500' by a fastener.

Since the length-direction transverse beams 600' and/or the width-direction transverse beams 500' are provided in the housing 200" in the related art, the length-direction transverse beams 600' and/or the width-direction transverse beams 500' occupy a large mounting space for accommodating the cells in the housing 200", causing a low space utilization of the housing 200". Generally, the ratio of the sum of the volumes of cells to the volume of the housing 200" is about 40%, or even lower. In other words, only about 40% of the space in the housing 200" in the related art is available for mounting the cells, resulting in a limited number of cells accommodated in the housing 200", limited capacity and voltage of the entire battery pack 10', and poor battery life of the battery pack 10'.

The battery pack 10 according to the embodiments of the present application can, on the one hand, reduce the use of length-direction transverse beams and/or width-direction transverse beams in the housing 200. Even the length-direction transverse beams and/or the width-direction transverse beams may be not provided in the housing 200, to reduce the space occupied by the length-direction transverse beams and/or the width-direction transverse beams in the housing 200, and improve the space utilization of the housing 200. On the other hand, it can reduce the use of end beams and side beams in the battery module 400, and reduce the space occupied by the end beams and the side beams in the housing 200, to improve the space utilization of the housing 200. As many cells 100 as possible are arranged in the housing 200, to increase the capacity, voltage and battery life of the entire battery pack.

Moreover, since no length-direction transverse beams and/or width-direction transverse beams are needed to be arranged in the housing 200, on the one hand, the manufacturing process of the housing 200 is simplified, the assembly complexity of cells 100 is reduced, and the production cost is reduced; and on the other hand, the weights of the housing 200 and the entire battery pack 10 are reduced, achieving a light weight of the battery pack 10. In particular, when the battery pack 10 is mounted on an electric vehicle, the battery life of the electric vehicle is improved, and a light weight of the electric vehicle is achieved.

In addition, the cell 100 itself can be used to strengthen the structural strength of the housing 200. That is, there is no need to provide a strengthening structure for enhancing the structural strength in the housing 200, and the cell 100 itself can directly replace the strengthening structure to ensure the structural strength of the housing 200, thus ensuring that the housing 200 is not prone to deformation under the action of an external force. Compared with the battery pack disclosed in Chinese Patent Document CN107925028A, the housing 200 can not only accommodate and protect the cells 100, but also support the cells 100 to improve the overall load-bearing capacity of the battery pack 10. The length of the cell 100 enhances the strength of the battery pack 10. In addition, the surface area of a single cell 100 is increased, to increase the heat dissipation area and increase the heat dissipation rate of the cell 100, thereby improving the safety of the entire battery pack 10 and making the battery pack 10 safer and more reliable.

In some specific embodiments of this application, the cell 100 includes a cell body 110 (which can be understood as a body part excluding small-sized protruding structures such as electrode tabs), and the volume V of the cell body 110 and the energy E of the cell body 110 satisfy: V/E≤2000 mm³·Wh⁻¹. Therefore, it is possible to ensure a sufficient heat dissipation area to ensure the heat dissipation effect, and reduce the volume ratio of the cells 100, which is beneficial to the compact arrangement of a plurality of cells 100 in the battery pack 10.

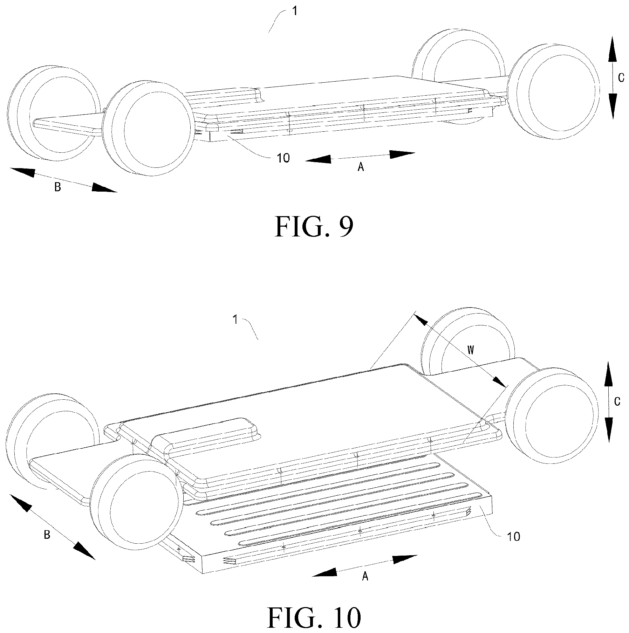

In some specific embodiments of the present application, as shown in FIGs. 9 and 10, the housing 200 is different from the battery pack housing disclosed in Chinese Patent Document CN107925028A, especially in terms of the size and load bearing capacity. The housing 200 includes a vehicle tray 210 that is fitted and connected to a vehicle body, to form a structure fitted to the vehicle body for accommodating and carrying the cells 100. The vehicle tray 210 is a separately produced tray for accommodating and mounting the cells 100. After the cell 100 is mounted in the vehicle tray 210, the vehicle tray 210 can be mounted to the vehicle body by a fastener. For example, the vehicle tray is hanged on a chassis of an electric vehicle, to accommodate and bear the cells

When the battery pack 10 is used as a battery pack for providing electric energy on a vehicle, the length direction of the cell 100 can be arranged along a length direction of the vehicle body, that is, the front and rear directions of the vehicle. At this time, the length L of the cell body 110 of the cell 100 may be 400-2500 mm. In some embodiments, L may be 400-1500 mm, so that the length of the cell 100 can be adapted to the length of the vehicle. When the battery pack 10 is used as a battery pack for providing electric energy on a vehicle, the length direction of the cell 100 can be arranged along a width direction of the vehicle body, that is, the left and right directions of the vehicle. At this time, the length L of the cell body 110 of the cell 100 may be 400-1500 mm, so that the length of the cell 100 can be adapted to the width of the vehicle. In some embodiments of the present application, the length L of the cell body is 700-2500 mm. Further, the length L of the cell body may be 800-1500 mm.

In some specific embodiments of the present application, as shown in FIG. 8, the housing 200 may also be directly formed on the electric vehicle, that is, the housing 200 is a device for mounting the cells 100 and formed at any appropriate position on the electric vehicle. For example, the housing 200 may be formed on the chassis of the electric vehicle.

In some specific embodiments of the present application, when the battery pack 10 is arranged on an electric vehicle, unlike the battery pack disclosed in Chinese Patent Document CN107925028A, the battery pack 10 also includes at least one of a battery management system (BMS), a battery connector, a battery sampler, a battery thermal management system, and other components required for the vehicle battery. The width direction B of the battery pack 10 is arranged along the width direction of the vehicle body, that is, the left and right directions of the vehicle; and the length direction of the battery pack 10 is arranged along the length direction of the vehicle body, that is, the front and rear directions of the vehicle. The present application is not limited thereto. The width direction B of the battery pack 10 may be arranged along the length direction of the vehicle body, and the length direction A of the battery pack 10 may be arranged along the width direction of the vehicle body. In some embodiments of the present application, the first direction and the second direction are two directions perpendicular to each other with the battery pack as a reference. The first direction may be the width direction of the battery pack, and the second direction may be the length direction of the battery pack.

Those skilled in the art can understand that the orientation of the cells 100 in the battery pack 10 and the orientation of the battery pack 10 on the electric vehicle can be combined in various forms. For example, the length direction of the cell 100 can be arranged along the width direction B of the battery pack 10 or along the length direction A of the battery pack 10. The width direction B of the battery pack 10 can be arranged along the width direction of the vehicle body or along the length direction of the vehicle body. For example, regardless of the width direction B of the battery pack 10 being arranged along the width direction of the vehicle body or along the length direction of the vehicle body, the length direction of the cell 100 is arranged along the width direction of the vehicle body. The relative direction of arrangement of the cell 100, the battery pack 10 and the vehicle body can be arranged according to the practical application to meet various requirements.

The cell 100 according to an embodiment of the present application will be described below with reference to the accompanying drawings.

In the following specific embodiments, the length L, the width H and the thickness D are in millimeters (mm), the surface area S is in square millimeter (mm ²), the volume V is in cubic millimeter (mm³), and the energy E is in watt-hour (Wh).

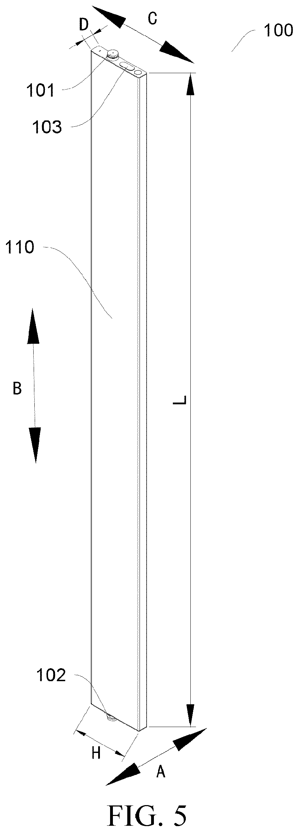

As shown in FIG. 5, the cell 100 according to an embodiment of the present application includes a cell body 110. It can be understood that the cell body 110 is a body part excluding small-sized protruding structures such as electrode tabs. The cell body 110 has a length L, a width H, and a thickness D.

The length L of the cell body 110 is greater than the width H of the cell body 110, the width H of the cell body 110 is greater than the thickness D of the cell body 110, and the length L of the cell body 110 and the width H of the cell body 110 satisfy: L/H=4-21. In some specific embodiments of the present application, the length L of the cell body 110 and the width H of the cell body 110 satisfy: L/H=9-13.

In the development of electric vehicles, the voltage platform requirement for the cells are predetermined, which makes the volume of the cell a fixed value. That is, when a certain voltage platform is reached, the amount of materials contained in the cell is constant, and thus the volume is constant, on the basis of use of materials of the same chemical system. In the cell 100 according to the embodiment of the present application, by designing the ratio of the length L to the width H of the cell body 110, the cell body 110 can be reasonably flattened and elongated at a given certain volume. On the one hand, this is conducive to the overall arrangement in the battery pack (for example, the arrangement of the battery pack 10 according to the above-mentioned embodiment of the present application), thereby improving the space utilization, enhancing the energy density, and thus increasing the battery life of the battery pack. On the other hand, this can ensure that the cell 100 has a large enough heat dissipation area to transfer the internal heat to the outside in time to prevent the heat from accumulating inside, thereby forming a higher energy density and supporting the improvement of battery life.

According to some specific embodiments of the present application, to optimize the arrangement of the cell 100 in the battery pack and improve the heat dissipation capacity of the cell 100, the length L and the thickness D of the cell body 110 satisfy: L/D=23-208. In some embodiments, L/D=23-200. According to some other specific embodiments of the present application, the length L and the thickness D of the cell body 110 satisfy: L/D=50-120.

In some specific embodiments of the present application, as shown in FIG. 5, the cell body 110 is structured to have a shape of rectangular parallelepiped with a smooth outer surface to have a certain structural strength. The cell core of the cell is placed in a prismatic cell casing, the opening of the cell casing is sealed with a cover plate, and an electrolyte is injected. Compared with the cell with an aluminum laminated film, the cell 100 according to the embodiment of the present application has good thermal conductivity, and can effectively eliminate the problem of heat dissipation caused by a large-sized structure, when used in conjunction with a conventional battery thermal management structure. Compared with cylindrical cells, the space utilization is higher, and the production and assembly processes are simpler.

When the cell 100 according to the embodiment of the present application is arranged in the housing 200 of the battery pack 10, the length direction and the thickness direction of the cell body 110 may extend in the horizontal directions, and the width direction of the cell body 110 may extend in the vertical direction. That is, the cell 100 stands on side. The horizontal and vertical directions are based on the direction of the battery pack 10 when it is used (for example, when used in an electric vehicle).

In some specific embodiments of this application, to optimize the arrangement of the cell 100 in the battery pack 10 to increase the energy density and increase the battery life, and to make the arrangement of the cell body 110 more compact and the energy more concentrated in the limited space of the housing 200, other parameters of the cell 100 are designed.

According to some embodiments of the present application, the length L of the cell body 110 and the volume V of the cell body 110 satisfy: L/V= 0.0005 mm⁻² - 0.002 mm⁻². According to some embodiments of the present application, the width H of the cell body 110 and the volume V of the cell body 110 satisfy: H/V= 0.0001 mm⁻²-0.00015 mm⁻². According to some embodiments of the present application, the thickness D of the cell body 110 and the volume V of the cell body 110 satisfy: D/V= 0.0000065 mm⁻²-0.00002 mm⁻². For a cell body 110 of a certain volume, the ratio of each of the length L, the width H, and the thickness D to the volume V can be designed to optimize the spatial distribution of unit energy, thereby facilitating the arrangement in the housing 200.

In some embodiments of the present application, the length L of the cell body 110 and the surface area S of the cell body 110 satisfy: L/S= 0.002 mm⁻¹-0.005 mm⁻¹. According to some embodiments of the present application, the length L of the cell body 110 and the energy E of the cell body 110 satisfy: L/E=0.8 mm·Wh⁻¹ -2.45 mm·Wh⁻¹. According to some embodiments of the present application, the length L of the cell body 110 and the energy E of the cell body 110 satisfy: L/E=1.65 mm·Wh⁻¹-2.45 mm·Wh⁻¹. As such, the cell 100 is facilitated to extend across two opposite sides of the housing 200 in its length direction, thereby improving the battery life of the battery pack 10, while the structural strength and heat dissipation effect of the cell 100 are considered.

In some other embodiments of this application, the surface area S of the cell body 110 and the volume V of the cell body 110 satisfy: S/V= 0.1-0.35 mm⁻¹. Therefore, it is possible to ensure a sufficient heat dissipation area to ensure the heat dissipation effect, and reduce the volume ratio of the cells 100, which is beneficial to the compact arrangement of a plurality of cells 100 in the battery pack 10.

The surface area S of the cell body 110 and the energy E of the cell body 110 satisfy: S/E≤1000 mm²·Wh⁻¹. This can ensure sufficient heat dissipation on the surface of the cell 100. especially when a ternary or a high-nickel ternary cathode material is employed in the power battery, the internal heat of the battery can be conducted in time, which is beneficial to the battery safety. In addition, the cell 100 in the embodiment of the present application is a prismatic cell with a smooth outer surface, which has a certain structural strength, and has a good thermal conductivity. Compared with a cell with a corrugated surface area, the process and subsequent assembly are less difficult.

In some specific embodiments of the present application, as shown in FIG. 5, the cell 100 further includes a first electrode tab 101 and a second electrode tab 102.

The first electrode tab 101 is provided at one end of the cell body 110 in the length direction, and the second electrode tab 102 is provided at the other end of the cell body 110 in the length direction. In other words, the length direction of the cell 100 may be the current direction inside the cell 100, that is, the current direction inside the cell 100 is as indicated by an arrow B. In this manner, since the current direction is the same as the length direction of the cell 100, the effective heat dissipation area of the cell 100 is larger and the heat dissipation efficiency is higher. Here, the first electrode tab 101 may be a positive electrode tab of the cell 100, and the second electrode tab 102 is a negative electrode tab of the cell 100; or, the first electrode tab 101 is the negative electrode tab of the cell 100, and the second electrode tab 102 is the positive electrode tab of the cell 100.

In some specific embodiments of the present application, as shown in FIG. 5, the cell 100 further includes at least one anti-explosion valve 103.

The at least one anti-explosion valve 103 is provided on at least one end of the cell body 110 in the length direction. When the cell 100 fails and expands, the gas pressure inside is enough to break through a flipping sheet in the at least one anti-explosion valve 103, causing a short circuit of the cell 100 to ensure the safety of the cell 100, and prevent the cell 100 from explosion.

Those skilled in the art can understand that the arrangement of the at least one anti-explosion valve 103 can be applied not only to a cell with an aluminum casing, but also to a pouch cell. In addition, the at least one anti-explosion valve 103 can also be arranged at other positions than the ends of the cell body 100.

In some specific embodiments of the present application, the two ends of the cell body 110 in the length direction are respectively provided with an anti-explosion valve 103, and the anti-explosion valves 103 at the two ends of the cell body 110 are exhausted via different exhaust passages 222.

For example, as shown in FIGs. 2, 5 and 11, the cell 100 is provided with an anti-explosion valve 103 at a first end facing the first side beam 201, and the first side beam 201 is provided with exhaust passages 222 therein. A gas inlet 221 is provided at a position on the first side beam 201 corresponding to the anti-explosion valve 103 of each cell 100, and the gas inlet 221 communicates with the exhaust passage 222. The housing 200 is provided with an exhaust vent communicating with the exhaust passage 222. And/or the cell 100 is provided with an anti-explosion valve 103 at a second end facing the second side beam 202, and second side beam 202 is provided with exhaust passages 222 therein. A gas inlet 221 is provided at a position on the second side beam 202 corresponding to the anti-explosion valve 103 of each cell 100, and the gas inlet 221 communicates with the exhaust passage 222. The housing 200 is provided with an exhaust vent communicating with the exhaust passage 222.

In the related art, during the use of the cell, if the gas pressure inside the cell increases to a certain degree, the anti-explosion valve is opened, so that the flame, smoke or gas inside the cell will be discharged through the anti-explosion valve. The flame, smoke or gas accumulates inside the battery pack, and if not discharged in time, will cause secondary damage to the cell. In the embodiment of the present application, since the first side beam 201 and/or second side beam 202 is/are provided with the gas inlet 221 corresponding to the anti-explosion valve 103 of the cell 100, and the first side beam 201 and/or second side beam 202 is/are provided the exhaust passage 222 therein, the anti-explosion valve is opened when the gas pressure inside the cell 100 increases, and the flame, smoke or gas inside the cell will directly enter the exhaust passages 222 inside the first side beam 201 and/or the second side beam 202 through the gas inlet 221, and will be discharged out of the first side beam 201 and/or the second side beam 202 through the exhaust vent, for example, discharged into the atmosphere through the exhaust vent. In this way, the flame, smoke or gas will not accumulate inside the battery pack 200, thereby preventing the flame, smoke or gas from causing secondary damage to the cell 100.

In addition, one end of each cell 100 in the plurality of cells 100 is exhausted through the exhaust passage 222 in the first side beam 201, and the other end of each cell 100 in the plurality of cells 100 is exhausted through the exhaust passage 222 in the second side beam 202. As a result, the two ends of the cell 100 are exhausted through different passages, which increases the exhaust distance and forms crossover exhaust, thereby reducing the temperature.

An electric vehicle 1 according to an embodiment of the present application is described below with reference to the accompanying drawings. The electric vehicle may include commercial vehicles, special vehicles, electric bicycles, electric motorcycles, electric scooters, and other electric vehicles which need to be powered by a battery pack to provide electrical energy to drive them to travel.

As shown in FIG. 9 and FIG. 10, the electric vehicle 1 according to the embodiment of the present application includes a battery pack 10 according to the above-mentioned embodiment of the present application, where the housing 200 can be integrally formed on the electric vehicle, or the housing 200 can also be a separately produced vehicle tray where the cell 100 is accommodated and mounted.

In the electric vehicle 1 according to the embodiment of the present application, the battery life can be improved without expanding the space occupied by the battery by using the battery pack 10 according to the embodiment of the present application.

In some specific embodiments of the present application, as shown in FIGs. 9 and 10, the battery pack 10 is arranged at a bottom of the electric vehicle 1, and the housing 200 is fixedly connected to a chassis of the electric vehicle 1. Since the mounting space at the chassis of the electric vehicle 1 is large, when the battery pack 10 is provided on the chassis of the electric vehicle 1, the number of cells 100 can be increased as many as possible, thereby increasing the battery life of the electric vehicle 1.

In some specific embodiments of this application, as shown in FIGs. 9 and 10, the electric vehicle 1 includes a battery pack 10 arranged at a bottom of the electric vehicle 1. The housing 200 is fixedly connected to a chassis of the electric vehicle 1. The width direction of the battery pack 10 extends along a width direction of a vehicle body of the electric vehicle 1, that is, the left and right directions of the electric vehicle 1, and the length direction of the battery pack 10 extends along a length direction of the vehicle body of the battery pack 10, that is, the front and rear directions of the electric vehicle 1. In other embodiments, the electric vehicle 1 may include a plurality of battery packs 10 arranged at the bottom of the electric vehicle 1, and the shape and size of the plurality of battery packs 10 may be the same or different. Each battery pack 10 can be adjusted according to the shape and size of the chassis of the electric vehicle 1, and the plurality of battery packs 10 are arranged along the length direction, that is, the front and rear directions of the vehicle body.

In some specific embodiments of the present application, the ratio of the width F of the housing 200 to the width W of the vehicle body satisfies: 50%≤F/W≤80%. In some other embodiments of the present application, the length L of the cell body in the width direction of the battery pack and the width W of the vehicle body satisfy: 46%≤L/W≤76%. In the foregoing embodiments, this can be achieved by arranging only one housing 200 along the width direction of the vehicle body. When there are multiple housings 200, the multiple housings 200 are arranged along the length direction of the vehicle body. Generally, for most vehicles, the width W of the vehicle body is 500-2000 mm, for example, 500 mm, 1600 mm, 1800 mm, and 2000 mm, and the length of the vehicle body is 500-5000 mm. For a passenger vehicle, the width of the passenger vehicle is usually 500-1800 mm, and the length of the vehicle body is 500-4000 mm.

In some other embodiments of the present application, the width F of the housing 200 is 500-1500 mm, which is much larger than the battery pack housing disclosed in Chinese Patent Document CN107925028A, to facilitate the accommodation of the battery module 400 in the battery pack in CN107925028A, and ensure the battery life. This size mate with the size of the vehicle body.

In some specific embodiments of the present application, the cell 100 includes a cell body 110, where the ratio of the length L of the cell body 110 to the width W of the vehicle body satisfies: 46%≤L/W≤76%. In this embodiment, this can be achieved by arranging only one cell 100 along the width direction of the vehicle body. In other possible implementations, multiple battery modules 400 or multiple cells 100 can be arranged in the length direction, while such size requirements are met. In some embodiments, the length L of the cell body 110 is 400-1500 mm.

Other configurations and operations of the cell 100, the battery pack 10, and the electric vehicle 1 according to the embodiments of the present application are known to those of ordinary skill in the art, and will not be described in detail here.

According to an embodiment in a third aspect of the present application, an energy storage device is provided, which includes the battery pack according to the embodiment in the first aspect of the present application.

The battery pack 10 according to the embodiments of the present application and the improvements in the energy density and other aspects effected by the designs of the arrangement and size parameters of the cell 100 are described by Comparative Embodiment 1, Embodiments 1-3, Comparative Embodiment 2 and Embodiments 4-5.

In the following embodiments and comparative embodiments, description is made with lithium iron phosphate battery as an example.

In Comparative Embodiment 1, Embodiment 1, Embodiment 2, and Embodiment 3, the total volume of the battery pack 10' is 213 L, and the total volume occupied by the housing 200', the internal battery management system and other power distribution modules is 58 L. Therefore, the actual volume remaining in the battery pack 10' for accommodating the cells, the width-direction transverse beam, and the length-direction transverse beam is 155 L. The volume of the power distribution box is 22.5 L, the length of the housing 200' is 1380 mm, the width is 1005 mm, and the thickness is 137 mm. The total volume of the battery pack is 213 L= 1380 x 1005 x 137 x 0.000001 + 22.5.

### Comparative Embodiment 1

In the battery pack 10' provided in the prior art, as shown in FIG. 1, the housing 200" is provided with two width-direction transverse beams 500' and one length-direction transverse beam 600' therein. The two width-direction transverse beams 500' and one length-direction transverse beam 600' divide the cells into six battery modules 400', and each battery module 400' has a battery module housing.

### Embodiment 1

In the battery pack 10 according to this embodiment of the present application, as shown in FIG. 12, the length direction of the cell 100 is arranged along the width direction B of the battery pack, and a plurality of cells 100 are arranged along the length direction A of the battery pack 10. In the width direction B of the battery pack, the housing 200 accommodates two cells 100. The housing 200 is provided with one width-direction transverse beam 500 and one length-direction transverse beam 600 therein. The width-direction transverse beam 500 extends along the width direction B of the battery pack 10, and the plurality of cells 100 are arranged along the length direction A of the battery pack 10 to form a battery array. The width-direction transverse beam 500 divides the battery array into at least two parts along the length direction A of the battery pack 10. In addition, the plurality of cells 100 are arranged into two rows of battery arrays along the width direction B of the battery pack, and the length-direction transverse beam 600 is located between the two adjacent rows of battery arrays. The first side beam 201 and the second side beam 202 of the housing 200 located at two sides of the battery pack 10 in the width direction B provide support for the cells 100, and the first end beam 203 and the second end beam 204 of the housing 200 located at two ends of the battery pack 10 in the length direction A provide an inward pressing force against adjacent cells 100. The housing 200 includes a layer of battery array along the height direction C of the battery pack 10. The battery array (also known as battery module) of the battery pack 10 does not provided with end beams and side beams.

### Embodiment 2

In the battery pack 10 according to this embodiment of the present application, as shown in FIG. 13, the length direction of the cell 100 is arranged along the width direction B of the battery pack, and a plurality of cells 100 are arranged along the length direction A of the battery pack 10. In the width direction B of the battery pack, the housing 200 accommodates one cell 100. The cell 100 extends from one side to the other side of the housing 200 in the width direction B of the battery pack 10. The housing 200 is provided with one width-direction transverse beam 500, but no length-direction transverse beam 600 therein. The width-direction transverse beam 500 extends along the width direction B of the battery pack 10, and the plurality of cells 100 are arranged along the length direction A of the battery pack 10 to form a battery array. The width-direction transverse beam 500 divides the battery array into two parts along the length direction A of the battery pack 10. The first side beam 201 and the second side beam 202 of the housing 200 located at two sides of the battery pack 10 in the width direction B provide support for the cells 100, and the first end beam 203 and the second end beam 204 of the housing 200 located at two ends of the battery pack 10 in the length direction A provide an inward pressing force against adjacent cells 100. The housing 200 includes a layer of battery array along the height direction C of the battery pack 10. The battery array (also known as battery module) of the battery pack 10 does not provided with end beams and side beams.

### Embodiment 3

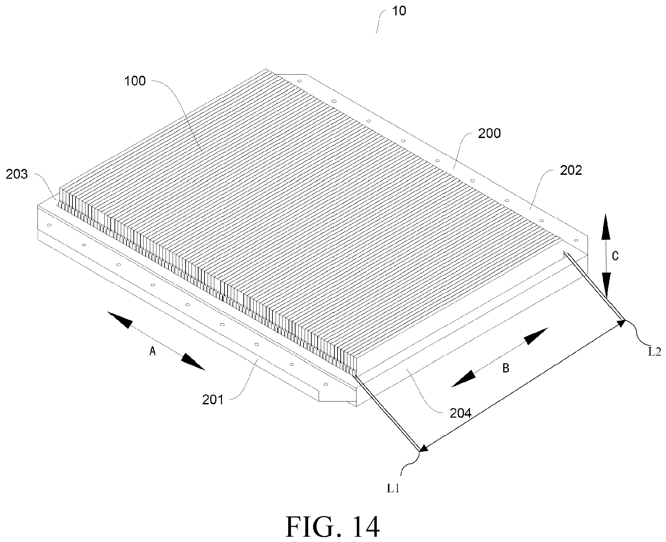

In the battery pack 10 according to this embodiment of the present application, as shown in FIG. 14, the length direction of the cell 100 is arranged along the width direction B of the battery pack, and a plurality of cells 100 are arranged along the length direction A of the battery pack 10. In the width direction B of the battery pack, the housing 200 accommodates one cell 100. The cell 100 extends from one side to the other side of the housing 200 in the width direction B of the battery pack 10. No width-direction transverse beam 500 and length-direction transverse beam 600 are provided in the housing 200. The first side beam 201 and the second side beam 202 of the housing 200 located at two sides of the battery pack 10 in the width direction B provide support for the cells 100, and the first end beam 203 and the second end beam 204 of the housing 200 located at two ends of the battery pack 10 in the length direction A provide an inward pressing force against adjacent cells 100. The housing 200 includes a layer of battery array along the height direction C of the battery pack 10. The battery array (also known as battery module) of the battery pack 10 does not provided with end beams and side beams.

It can be known by those skilled in the art through comparison of Comparative Embodiment 1 and Embodiments 1-3 that compared with the battery pack 10' in the prior art, the battery pack 10 according to the embodiment of the present application has a space utilization breaking through the limitations of the existing battery packs by the designs of the arrangement of the cells 100, the size parameters and other factors, thereby achieving a higher energy density.

In Comparative Embodiment 2, Embodiment 4 and Embodiment 5, the total volume of the battery pack 10' is 283 L, and the total volume occupied by the housing 200', the internal battery management system and other power distribution modules is 89 L. Therefore, the actual volume remaining in the battery pack 10' for accommodating the cells and/or the length-direction transverse beam and the width-direction transverse beam is 221 L. The length of the housing 200" is 1380 mm, the width is 1380 mm, and the thickness is 137 mm; and the cell length is 215 mm, and the width is 118 mm, and the height is 13.5 mm. The volume of the power distribution box is 11 L, and the total volume of the battery pack is 310 L=1580 x 1380 x 137 x 0.000001 + 11.

### Comparative Embodiment 2

In the battery pack 10' provided in the prior art, as shown in FIG. 1, the housing 200" is provided with two width-direction transverse beams 500' and one length-direction transverse beam 600' therein. The two width-direction transverse beams 500' and one length-direction transverse beam 600' divide the cells into six battery modules 400', and each battery module 400' has side beams and end beams.

### Embodiment 4

In the battery pack 10 according to this embodiment of the present application, as shown in FIG. 15, the length direction of the cell 100 is arranged along the length direction A of the battery pack, and a plurality of cells 100 are arranged along the width direction B of the battery pack 10. In the length direction A of the battery pack, the housing 200 accommodate one cell 100. The cell 100 extends from one side to the other side of the housing 200 in the length direction A of the battery pack 10. The housing 200 is provided with one length-direction transverse beam 600, but no width-direction transverse beam 500 therein. The length-direction transverse beam 600 extends along the length direction A of the battery pack 10, and the plurality of cells 100 are arranged along the width direction B of the battery pack 10 to form a battery array. The length-direction transverse beam 600 divides the battery array into two parts along the width direction B of the battery pack 10. The first end beam 203 and the second end beam 204 of the housing 200 located at two ends of the battery pack 10 in the length direction A provide support for the cells 100, and the first side beam 201 and the second side beam 202 of the housing 200 located at two sides of the battery pack 10 in the width direction B provide an inward pressing force against adjacent cells 100. The housing 200 includes a layer of battery array along the height direction C of the battery pack 10. The battery array (also known as battery module) of the battery pack 10 does not provided with end beams and side beams.

### Embodiment 5

In the battery pack 10 according to this embodiment of the present application, as shown in FIG. 16, the length direction of the cell 100 is arranged along the length direction A of the battery pack, and a plurality of cells 100 are arranged along the width direction B of the battery pack 10. In the length direction A of the battery pack, the housing 200 accommodates one cell 100, and the cell 100 extends from one side to the other side of the housing 200 in the length direction A of the battery pack 10. No width-direction transverse beam 500 and length-direction transverse beam 600 are provided in the housing 200. The first end beam 203 and the second end beam 204 of the housing 200 located at two ends of the battery pack 10 in the length direction A provide support for the cells 100, and the first side beam 201 and the second side beam 202 of the housing 200 located at two sides of the battery pack 10 in the width direction B provide an inward pressing force against adjacent cells 100. The housing 200 includes a layer of battery array along the height direction C of the battery pack 10. The battery array (also known as battery module) of the battery pack 10 does not provided with end beams and side beams.

In Comparative Embodiment 3, and Embodiment 6, the total volume of the battery pack 10' is 414 L, and the total volume occupied by the housing 200', the internal battery management system and other power distribution modules is 58 L. Therefore, the actual volume remaining in the battery pack 10' for accommodating the cells and/or the length-direction transverse beam and the width-direction transverse beam is 356 L. The length of the housing 200' is 2130 mm, the width is 1380 mm, and the thickness is 137 mm. The volume of the power distribution box is 11 L, and the total volume of the battery pack is 414 L = 2130 x 1380 x 137 x 0.000001+11.

### Comparative Embodiment 3

The arrangement of cells is the same as that in Comparative Embodiment 1.

### Embodiment 6

The arrangement of cells in the battery pack is the same as that in Embodiment 5.

### Embodiment 7

In this embodiment, the total volume of the battery pack 10' is 508 L, and the total volume occupied by the housing 200', the internal battery management system and other power distribution modules is 119 L. Therefore, the actual volume remaining in the battery pack 10' for accommodating the cells and/or the length-direction transverse beam and the width-direction transverse beam is 389 L. The length of the housing 200" is 2630 mm, the width is 1380 mm, and the thickness is 137 mm. The volume of the power distribution box is 11 L, and the total volume of the battery pack is 414 L = 2630 x 1380 x 137 x 0.000001 + 11. The arrangement of cells in the battery pack is the same as that in Embodiment 5.

The specific parameters of Embodiments 1-7, and Comparative Embodiments 1-3 are shown in Table 1. The total cell volume is the sum of the volumes of multiple cells; the volume of the battery pack is the overall volume of a three-dimensional shape defined by an external profile of the battery pack, that is, the volume of the three-dimensional area enclosed in space by the external profile of the battery pack; and the volume of the cell accommodating cavity is the volume of the accommodating space defined in the housing.

**Table 1**

| | Size of cell: length, width, and height (mm) | Number | Capacity of cell (Ah) | Power of cell (Wh) | Volume of cell (L) | Energy density of cell (Wh/L) | Power of battery pack (Wh) | Total volume of battery pack (L) | Energy density of battery pack (Wh/L) | Sum of volumes of cells /volume of battery pack (%) |
|---|---|---|---|---|---|---|---|---|---|---|
| Comparative Embodiment 1 | 208*118 *13.5 | 352 | 47.5 | 152 | 0.331 | 459 | 53504 | 213 | 251 | 54.76% |
| Embodiment 1 | 435*118 *13.5 | 176 | 95 | 304 | 0.693 | 439 | 53504 | 213 | 252 | 57.39% |
| Embodiment 2 | 905*118 *13.5 | 88 | 202 | 646.4 | 1.442 | 448 | 56883 | 213 | 268 | 59.70% |
| Embodiment 3 | 905*118 *13.5 | 92 | 202 | 646.4 | 1.442 | 448 | 59469 | 213 | 280 | 62.41% |
| Comparative Embodiment 2 | 208*118 *13.5 | 500 | 47.5 | 152 | 0.331 | 459 | 76000 | 310 | 245 | 53.49% |
| Embodiment 4 | 1280*118 *13.5 | 90 | 286 | 915.2 | 2.039 | 449 | 82368 | 310 | 266 | 59.25% |
| Embodiment 5 | 1280*118 *13.5 | 93 | 286 | 915.2 | 2.039 | 449 | 85114 | 310 | 275 | 61.23% |
| Comparative Embodiment 3 | 208*118 *13.5 | 752 | 47.5 | 152 | 0.331 | 459 | 114304 | 414 | 276 | 60.23% |
| Embodiment 6 | 2000*118 *13.5 | 94 | 448 | 1434 | 3 | 450 | 134758 | 414 | 326 | 72.39% |
| Embodiment 7 | 2500*118 *13.5 | 94 | 561 | 1795 | 4 | 451 | 168749 | 508 | 332 | 73.66% |

It can be known by those skilled in the art through comparison of the comparative embodiments and the embodiments of the present application that the battery pack 10 according to the embodiment of the present application has a space utilization breaking through the limitations of the existing battery packs by the designs of the arrangement of the cells 100, the size parameters and other factors, thereby achieving a higher energy density. Moreover, this increase in the energy density will be enlarged as the overall volume of the battery pack increases. That is, for a battery pack with a larger volume, the improvement in energy density effected by the solution in the embodiments of this application is more significant.

In description of this specification, description of reference terms such as "specific embodiments", or "specific examples", means including specific features, structures, materials, or features described in the embodiment or example in at least one embodiment or example of this application. In this specification, exemplary descriptions of the foregoing terms do not necessarily refer to the same embodiment or example.

Although the embodiments of this application have been shown and described, a person of ordinary skill in the art should understand that various changes, modifications, replacements and variations may be made to the embodiments without departing from the principles and spirit of this application, and the scope of this application is as defined by the appended claims and their equivalents.

Other combinations of embodiments of the present invention are listed below according to the following clauses:
Clause 1. A battery pack, comprising: a housing; a plurality of cells, provided in the housing;
   wherein the sum V1 of the volumes of the plurality of cells and the volume V2 of the battery pack satisfy V1/V2≥55%; and
   the battery pack has a first direction and a second direction perpendicular to each other; a length direction of the cell is arranged along the first direction of the battery pack, and the plurality of cells are arranged along the second direction of the battery pack; the housing accommodates only one cell along the first direction; and the cell comprises a cell body, and the length of the cell body is 600-2500 mm.
Clause 2. The battery pack according to Clause 1, wherein V1/V2≥60%.
Clause 3. The battery pack according to Clause 2, wherein V1/V2≥62%.
Clause 4. The battery pack according to Clause 3, wherein V1/V2≥65%.
Clause 5. The battery pack according to Clause 1, wherein the first direction is a width direction of the battery pack, and the second direction is a length direction of the battery pack; the length direction of the cell is arranged along the width direction of the battery pack, and the plurality of cells are arranged along the length direction of the battery pack.
Clause 6. The battery pack according to Clause 5, wherein the housing accommodates only one cell in the width direction of the battery pack.
Clause 7. The battery pack according to Clause 5, wherein in the width direction of the battery pack, a shortest distance from one end of the cell to a side beam of the housing adjacent to the end of the cell is L1, a shortest distance from the other end of the cell to a side beam of the housing adjacent to the other end of the cell is L2, and the length L of the cell satisfies: L1+L2<L.
Clause 8. The battery pack according to Clause 5, wherein along the width direction of the battery pack, the cell extends from one side to the other side of the housing.
Clause 9. The battery pack according to any one of Clauses 6 to 8, wherein at least one width-direction transverse beam extending along the width direction of the battery pack is provided in the housing, the plurality of cells are arranged along the length direction of the battery pack to form a battery array, the width-direction transverse beam divides the battery array into at least two parts along the length direction of the battery pack, and each part of the battery array comprises at least one cell.
Clause 10. The battery pack according to Clause 5, wherein the length direction of the cell is arranged along the width direction of the battery pack, the plurality of cells are arranged along the length direction of the battery pack to form a battery array, at least two rows of battery arrays are arranged in the housing along the width direction of the battery pack, at least one length-direction transverse beam extending along the length direction of the battery pack is provided in the housing, and the length-direction transverse beam is located between two adjacent rows of battery arrays.
Clause 11. The battery pack according to any one of Clauses 6 to 8 and 10, wherein the housing comprises side beams located at two sides of the battery pack in the width direction, and two ends of the cell in the length direction are supported by the side beams; and
   the housing comprises end beams located at two ends of the battery pack in the length direction, and the end beams provide an inward pressing force against cells adjacent to the end beams.
Clause 12. The battery pack according to any one of Clauses 1 to 8 and 10, wherein the first direction is a width direction of the battery pack, and the second direction is a length direction of the battery pack; the length direction of the cell is arranged along the width direction of the battery pack, and the plurality of cells are arranged along the length direction of the battery pack to form a battery array; and at least two layers of battery arrays are provided in the housing along a height direction of the battery pack. Clause 13. The battery pack according to Clause 1, wherein the first direction is a width direction of the battery pack, and the second direction is a length direction of the battery pack; and the length direction of the cell is arranged along the length direction of the battery pack, and the plurality of cells are arranged along the width direction of the battery pack.
Clause 14. The battery pack according to Clause 13, wherein the housing accommodates only one cell in the length direction of the battery pack.
Clause 15. The battery pack according to Clause 13, wherein in the length direction of the battery pack, a shortest distance from one end of the cell to an end beam of the housing adjacent to the end of the cell is L3, a shortest distance from the other end of the cell to an end beam of the housing adjacent to the other end of the cell is L4, and the length L of the cell satisfies: L3+L4<L. Clause 16. The battery pack according to Clause 13, wherein along the length direction of the battery pack, the cell extends from one end to the other end of the housing.
Clause 17. The battery pack according to any one of Clauses 14 to 16, wherein at least one length-direction transverse beam extending along the length direction of the battery pack is provided in the housing, the plurality of cells are arranged along the width direction of the battery pack to form a battery array, the length-direction transverse beam divides the battery array into at least two parts along the width direction of the battery pack, and each part of the battery array comprises at least one cell.
Clause 18. The battery pack according to Clause 13, wherein the length direction of the cell is arranged along the length direction of the battery pack, the plurality of cells are arranged along the width direction of the battery pack to form a battery array, at least two rows of battery arrays are arranged in the housing along the length direction of the battery pack, at least one width-direction transverse beam extending along the width direction of the battery pack is provided in the housing, and the width-direction transverse beam is located between two adjacent rows of battery arrays.
Clause 19. The battery pack according to any one of Clauses 14 to 16 and 18, wherein the housing comprises ends beams located at two ends of the battery pack in the length direction, and two ends of the cell in the length direction are supported by the end beams; and
   the housing comprises two side beams located at two sides of the battery pack in the width direction, and the side beams provide an inward pressing force against cells adjacent to the side beams.
Clause 20. The battery pack according to any one of Clauses 14 to 16 and 18, wherein the length direction of the cell is arranged along the length direction of the battery pack, and the plurality of cells are arranged along the width direction of the battery pack to form a battery array; and at least two layers of battery arrays are provided in the housing along a height direction of the battery pack.
Clause 21. The battery pack according to any one of Clauses 1 to 8, 10, 14 to 16, and 18, wherein the housing includes a vehicle tray that is fitted and connected to the vehicle body.
Clause 22. The battery pack according to any one of Clauses 1 to 8, 10, 14 to 16, and 18, wherein a width F of the housing in the width direction of the battery pack is 500-1500 mm.
Clause 23. The battery pack according to any one of Clauses 1 to 8, 10, 14 to 16, and 18, further comprising a battery management system and/or a battery thermal management system.
Clause 24. The battery pack according to any one of Clauses 1 to 8, 10, 14 to 16, and 18, wherein the housing is formed on an electric vehicle.
Clause 25. The battery pack according to any one of Clauses 1 to 8, 10, 14 to 16, and 18, wherein the width direction of the battery pack is arranged along a width direction of a vehicle body, and the length direction of the battery pack is arranged along a length direction of the vehicle body; or
   the width direction of the battery pack is arranged along the length direction of the vehicle body, and the length direction of the battery pack is arranged along the width direction of the vehicle body.
Clause 26. The battery pack according to any one of Clauses 1 to 8, 10, 14 to 16, and 18, wherein the cell comprises a cell body, and the cell body has a length L, a width H and a thickness D, wherein the length L of the cell body is greater than the width H, the width H of the cell body is greater than the thickness D, and the length L and the width H of the cell body satisfy L/H=4-21. Clause 27. The battery pack according to any one of Clauses 1 to 8, 10, 14 to 16, and 18, wherein the cell body has a length Land a thickness D, and the length L of the cell body and the thickness D of the cell body satisfy L/D=23-208.
Clause 28. The battery pack according to any one of Clauses 1 to 8, 10, 14 to 16, and 18, wherein the cell body has a length L and a volume V, and the length L of the cell body and the volume V of the cell body satisfy L/V= 0.0005 mm⁻² - 0.002 mm⁻².
Clause 29. The battery pack according to any one of Clauses 1 to 8, 10, 14 to 16, and 18, wherein the cell body has a width H and a volume V, and the width H of the cell body and the volume V of the cell body satisfy H/V= 0.0001 mm⁻²-0.00015 mm⁻². Clause 30. The battery pack according to any one of Clauses 1 to 8, 10, 14 to 16, and 18, wherein the cell body has a thickness D and a volume V, and the thickness D of the cell body and the volume V of the cell body satisfy D/V= 0.0000065 mm⁻²-000002 mm⁻².
Clause 31. The battery pack according to any one of Clauses 1 to 8, 10, 14 to 16, and 18, wherein the cell body has a length Land a surface area S, and the length L of the cell body and the surface area S of the cell body satisfy L/S= 0.002 mm⁻¹-0.005 mm⁻¹. Clause 32. The battery pack according to any one of Clauses 1 to 8, 10, 14 to 16, and 18, wherein the cell body has a surface area S and a volume V, and the surface area S of the cell body and the volume V of the cell body satisfy S/V= 0.1 mm⁻¹-0.35 mm⁻¹. Clause 33. The battery pack according to Clause 1, wherein the cell body has a length L of 700-2500 mm.
Clause 34. The battery pack according to Clause 33, wherein the cell body has a length L of 800-1500 mm.
Clause 35. The battery pack according to any one of Clauses 1 to 8, 10, 14 to 16, and 18, wherein the cell is a prismatic cell with an aluminum casing.
Clause 36. The battery pack according to Clause 35, wherein the cell comprises a cell body and at least one anti-explosion valve, and the at least one anti-explosion valve is provided on at least one end of the cell body in the length direction.
Clause 37. The battery pack according to Clause 35, wherein the cell comprises a cell body, and two ends of the cell body in the length direction are respectively provided with an anti-explosion valve.
Clause 38. An electric vehicle, comprising a battery pack according to any one of Clauses 1 to 37.
Clause 39. The electric vehicle according to Clause 38, wherein the battery pack is disposed at a bottom of the electric vehicle, and the housing is fixedly connected to the chassis of the electric vehicle.
Clause 40. The electric vehicle according to Clause 38 or 39, comprising a battery pack disposed at a bottom of the electric vehicle, wherein a width direction of the battery pack is arranged along a width direction of a vehicle body of the electric vehicle, and a length direction of the battery pack is arranged along a length direction of the vehicle body of the electric vehicle.
Clause 41. The electric vehicle according to Clause 40, wherein the width F of the housing and the width W of the vehicle body satisfy 50%≤F/W≤80%.
Clause 42. The electric vehicle according to Clause 42, wherein the cell comprises a cell body, and the length L of the cell body in the width direction of the battery pack and the width W of the vehicle body satisfy 46%≤L/W≤76%.
Clause 43. The electric vehicle according to Clause 41 or 42, wherein the width W of the vehicle body is 500-2000 mm.
Clause 44. An energy storage device, comprising a battery pack according to any one of Clauses 1 to 20, and 22-37.

## Claims

1. A battery pack, comprising:
a housing (200) comprising a vehicle tray (210) that is fitted and connected to a vehicle body; or a housing being formed on a vehicle body;
a plurality of cells, provided in the housing;
wherein the sum V1 of the volumes of the plurality of cells and the volume V2 of the battery pack satisfy V1/V2≥55%; and
the battery pack has a first direction and a second direction perpendicular to each other; a length direction of the cell is arranged along the first direction of the battery pack, and the plurality of cells are arranged along the second direction of the battery pack; the housing accommodates only one cell along the first direction; and the cell comprises a cell body, and the length of the cell body is 400-2500 mm.

2. The battery pack according to claim 1, wherein V1/V2≥60%, preferably ≥62%, most preferred ≥65%.

3. The battery pack according to claim 1, wherein the first direction is a width direction of the battery pack, and the second direction is a length direction of the battery pack; the length direction of the cell is arranged along the width direction of the battery pack, and the plurality of cells are arranged along the length direction of the battery pack.

4. The battery pack according to claim 3, wherein the housing accommodates only one cell in the width direction of the battery pack, or
wherein in the width direction of the battery pack, a shortest distance from one end of the cell to a side beam of the housing adjacent to the end of the cell is L1, a shortest distance from the other end of the cell to a side beam of the housing adjacent to the other end of the cell is L2, and the length L of the cell satisfies: L1+L2<L, or
wherein along the width direction of the battery pack, the cell extends from one side to the other side of the housing, or
wherein the length direction of the cell is arranged along the width direction of the battery pack, the plurality of cells are arranged along the length direction of the battery pack to form a battery array, at least two rows of battery arrays are arranged in the housing along the width direction of the battery pack, at least one length-direction transverse beam extending along the length direction of the battery pack is provided in the housing, and the length-direction transverse beam is located between two adjacent rows of battery arrays.

5. The battery pack according to any one of claim 4, wherein at least one width-direction transverse beam extending along the width direction of the battery pack is provided in the housing, the plurality of cells are arranged along the length direction of the battery pack to form a battery array, the width-direction transverse beam divides the battery array into at least two parts along the length direction of the battery pack, and each part of the battery array comprises at least one cell.

6. The battery pack according to any one of claim 4, wherein the housing comprises side beams located at two sides of the battery pack in the width direction, and two ends of the cell in the length direction are supported by the side beams; and
the housing comprises end beams located at two ends of the battery pack in the length direction, and the end beams provide an inward pressing force against cells adjacent to the end beams.

7. The battery pack according to any one of claims 1 to 4, wherein the first direction is a width direction of the battery pack, and the second direction is a length direction of the battery pack; the length direction of the cell is arranged along the width direction of the battery pack, and the plurality of cells are arranged along the length direction of the battery pack to form a battery array; and at least two layers of battery arrays are provided in the housing along a height direction of the battery pack.

8. The battery pack according to claim 1, wherein the first direction is a width direction of the battery pack, and the second direction is a length direction of the battery pack; and the length direction of the cell is arranged along the length direction of the battery pack, and the plurality of cells are arranged along the width direction of the battery pack, wherein preferably:
the housing accommodates only one cell in the length direction of the battery pack, or
in the length direction of the battery pack, a shortest distance from one end of the cell to an end beam of the housing adjacent to the end of the cell is L3, a shortest distance from the other end of the cell to an end beam of the housing adjacent to the other end of the cell is L4, and the length L of the cell satisfies: L3+L4<L, or
along the length direction of the battery pack, the cell extends from one end to the other end of the housing, or
the length direction of the cell is arranged along the length direction of the battery pack, the plurality of cells are arranged along the width direction of the battery pack to form a battery array, at least two rows of battery arrays are arranged in the housing along the length direction of the battery pack, at least one width-direction transverse beam extending along the width direction of the battery pack is provided in the housing, and the width-direction transverse beam is located between two adj acent rows of battery arrays.

9. The battery pack according to any one of claim 8, wherein at least one length-direction transverse beam extending along the length direction of the battery pack is provided in the housing, the plurality of cells are arranged along the width direction of the battery pack to form a battery array, the length-direction transverse beam divides the battery array into at least two parts along the width direction of the battery pack, and each part of the battery array comprises at least one cell.

10. The battery pack according to any one of claim 8, wherein the housing comprises ends beams located at two ends of the battery pack in the length direction, and two ends of the cell in the length direction are supported by the end beams; and
the housing comprises two side beams located at two sides of the battery pack in the width direction, and the side beams provide an inward pressing force against cells adjacent to the side beams, or
wherein the length direction of the cell is arranged along the length direction of the battery pack, and the plurality of cells are arranged along the width direction of the battery pack to form a battery array; and at least two layers of battery arrays are provided in the housing along a height direction of the battery pack.

11. The battery pack according to any one of claims 1 to 4 and 8, wherein the length of the cell body is 400-1500 mm, or
wherein a width F of the housing in the width direction of the battery pack is 500-1500 mm, or
further comprising a battery management system and/or a battery thermal management system, or
wherein the housing is formed on an electric vehicle, or
wherein the width direction of the battery pack is arranged along a width direction of a vehicle body, and the length direction of the battery pack is arranged along a length direction of the vehicle body; or
the width direction of the battery pack is arranged along the length direction of the vehicle body, and the length direction of the battery pack is arranged along the width direction of the vehicle body, or
wherein the cell comprises a cell body, and the cell body has a length L, a width H and a thickness D, wherein the length L of the cell body is greater than the width H, the width H of the cell body is greater than the thickness D, and the length L and the width H of the cell body satisfy L/H=4-21, or
wherein the cell body has a length L and a thickness D, and the length L of the cell body and the thickness D of the cell body satisfy L/D=23-208, or
wherein the cell body has a length L and a volume V, and the length L of the cell body and the volume V of the cell body satisfy L/V= 0.0005 mm⁻² - 0.002 mm⁻², or
wherein the cell body has a width H and a volume V, and the width H of the cell body and the volume V of the cell body satisfy H/V= 0.0001 mm⁻²-0.00015 mm⁻², or
wherein the cell body has a thickness D and a volume V, and the thickness D of the cell body and the volume V of the cell body satisfy D/V= 0.0000065 mm⁻²-0.00002 mm⁻², or
wherein the cell body has a length L and a surface area S, and the length L of the cell body and the surface area S of the cell body satisfy L/S= 0.002 mm⁻¹-0.005 mm⁻¹, or
wherein the cell body has a surface area S and a volume V, and the surface area S of the cell body and the volume V of the cell body satisfy S/V= 0.1 mm⁻¹-0.35 mm⁻¹.

12. The battery pack according to claim 1, wherein the cell body has a length L of 700-2500 mm, wherein the cell body preferably has a length L of 800-1500 mm.

13. The battery pack according to any one of claims 1 to 4 and 8, wherein the cell is a prismatic cell with an aluminum casing, wherein the cell preferably comprises a cell body and at least one anti-explosion valve, and the at least one anti-explosion valve is provided on at least one end of the cell body in the length direction, or
wherein the cell preferably comprises a cell body, and two ends of the cell body in the length direction are respectively provided with an anti-explosion valve.

14. An electric vehicle, comprising a battery pack according to any one of claims 1 to 13.

15. The electric vehicle according to claim 14, wherein the battery pack is disposed at a bottom of the electric vehicle, and the housing is fixedly connected to the chassis of the electric vehicle, and/or
comprising a battery pack disposed at a bottom of the electric vehicle, wherein a width direction of the battery pack is arranged along a width direction of a vehicle body of the electric vehicle, and a length direction of the battery pack is arranged along a length direction of the vehicle body of the electric vehicle, wherein the width F of the housing and the width W of the vehicle body preferably satisfy 50%≤F/W≤80%.

16. The electric vehicle according to claim 15, wherein the cell comprises a cell body, and the length L of the cell body in the width direction of the battery pack and the width W of the vehicle body satisfy 46%≤L/W≤76%, and/or
wherein the width W of the vehicle body is 500-2000 mm.

17. An energy storage device, comprising a battery pack according to any one of claims 1 to 13.
